Europäisches Patentamt

European Patent Office

Office européen des brevets

(19)

(11) Publication number: **0 123 932**
**A1**

(12) **EUROPEAN PATENT APPLICATION**

(21) Application number: **84103559.5**

(22) Date of filing: **30.03.84**

(51) Int. Cl.³: **A 22 C 11/02**

(30) Priority: **31.03.83 US 481031**
**24.02.84 US 583317**

(43) Date of publication of application: **07.11.84**
**Bulletin 84/45**

(84) Designated Contracting States: **AT BE CH DE FR GB IT LI LU NL SE**

(71) Applicant: **UNION CARBIDE CORPORATION, Old Ridgebury Road, Danbury Connecticut 06817 (US)**

(72) Inventor: **Nausedas, Joseph Anthony, 5550 Ann Marie Lane, Oak Forest Ill. 60452 (US)**

(74) Representative: **Schwan, Gerhard, Dipl.-Ing., Elfenstrasse 32, D-8000 München 83 (DE)**

(54) Stuffing method and apparatus and casing article core.

(57) An improved high speed stuffing machine, method and casing article core for forming links such as frankfurters. The permanent stuffing horn of a conventional link stuffing machine is dispensed with, and apparatus is provided for utilizing highly compacted shirred casing (30) carried directly on a disposable core (10), wherein the core serves as a rotatable stuffing horn. A roller chuck (23) is provided for engaging and rotating the cored casing article for purposes of linking, and resisting the thrust of the core due to emulsion flow while providing an emulsion seal between the casing article and chuck to prevent backflow of emulsion. The aft end (14) of the core is received in a quick connect emulsion discharge (22) which provides a bearing surface and a rotating emulsion seal to allow the core to rotate while the discharge remains stationary. The cored high density casing article allows the casing length to be increased by an integral multiple over conventional practice, which results in significant economies in the high speed production of linked sausages.

FP-13937/EP

## STUFFING METHOD AND APPARATUS AND CASING ARTICLE CORE

This invention relates to stuffing methods and machines as well as to casing article cores, particularly for high speed production of linked sausages such as frankfurters.

One widely accepted high speed stuffing machine for small diameter linked sausages is the "Frank-A-Matic" (registered trademark of Townsend Engineering Company), described generally in U.S. Patent 3,115,668. That machine is configured to automatically load the casing in the form of a compacted shirred tubular casing article called a "shirred casing stick" from a hopper, to insert a reciprocatable stuffing horn through the bore of the casing stick positioning the discharge end of the stuffing horn near a rotating chuck, to initiate the flow of emulsion causing stuffed casing to pass through the rotating chuck to a linker capable of producing links of specified size, and to hang the stuffed product on a looper from which the links can be removed by an operator.

Typical embodiments of the machine illustrated in U.S. Patent 3,115,668 have a stuffing horn which is somewhat less than 60 cm in length, and is reciprocated to allow loading of an uncored shirred casing stick. The casing length in the stick ranges typically from about 16.8 m to 48.8 m, and the machine cycle is such that the stick is expended and the sausage is stuffed and linked in substantially less than a minute, typically 45 seconds for the longest casing length. Shirred casing sticks carrying that length of casing, typically 53 cm or less in length, are fed to the machine from a magazine, and the machine automatically cycles to stuff the casing length, to withdraw the horn and to terminate supply of emulsion upon completion of stuffing a casing stick, to load a new casing stick into position for the next cycle, then to reinsert the stuffing horn through the bore of the new casing stick prior to initiating a new stuffing cycle.

In practice, each user of such a machine adopts a casing stick size (unshirred casing length and casing diameter) compatible with the processing operation which he employs. Typically, the links are removed from a looper by means of s smoke stick, and the smoke stick carrying a plurality of linked sausages is then entered into the processing operation for smoking, cooking and chilling. The number of links which can be accommodated on a smoke stick for a particular processor determines the length of shirred casing which should be stuffed per machine cycle. More particularly, the machine automatically begins stuffing the product as soon as a new casing stick is loaded and the stuffing horn reciprocated into position. However, after the casing is expended (typically in 45 seconds or less), the operator must tie off both the aft and the fore end of the casing, strip out whatever emulsion remains in the tail and the lead end of the casing, and attach the ends of the casing to some part of the looped, stuffed casing to prevent the links from untwisting, before carrying the link-laden smoke stick to the smoke house. This requires a significant amount of time and effort to be expended by the operator. Shirred stick lengths are now chosen, except in small sizes, to provide the maximum casing length that a smoke stick can handle without crowding the adjacent hanging stuffed lengths so close together that touch marks would occur. It would be of little practical value to increase the length of casing in a shirred stick by 20 % or 30 % or even 60 % in such an operation, since the extra casing would only partly fill an additional smoke stick, and this would be undesirable.

Means can be devised to transport two or more smoke sticks to the smokehouse simultaneously to save travel, and more importantly, if the links can remain connected from one stick to the other, to save tying off and stripping time. However, to make that operation practical would require an increase in casing length by some integral multiple (e.g., a factor of two or three) of the basic casing length in use at the particular processing house. Such an increase is achievable by use of high density shirred casing as described in Belgian Patent No. 893,047. Thus, if the amount of casing per casing stick is increased by a factor of two or three, the tying-off operation would be necessary after only every two or three smoke sticks, rather than each smoke stick, and a plurality of smoke sticks, such as two or three, could be simultaneously transported to the smokehouse, saving a measurable amount of time and labor as well as wasted casing and emulsion lost in stripping. Many multiple stuffing machine processing houses operate with excess machine capacity in order to meet, under worst case conditions, the given number of kilograms of linked sausages per hour requirement necessary to keep the smokehouse running efficiently. The above described savings in tie-off, stripping and transport time as well as other advantages, to be discussed below, have the potential to provide an adequate safety margin with

- 4 -

0123932

one fewer stuffing machine.

In view of the foregoing, it is a general aim of the present invention to provide the advantages of high density casing to the high speed production of linked sausages such as frankfurters.

More particularly, it is an object of the present invention to adapt the Frank-A-Matic type high speed link sausage stuffing machine for greater throughput by optimizing such machine for use with cored high density casing. It is a further object to provide for an improved cored casing article.

In accordance with the invention, means are provided for accommodating a high speed link sausage stuffing machine to a casing article capable of providing a plurality (integral multiple) of "smoke stick length" links to reduce by an integral multiple the number of tie-off operations required, as well as to provide a plurality of "smoke stick length" sausage links for simultaneous transport to the smokehouse. More particularly, a stuffing apparatus for producing linked sausages such as frankfurters, said stuffing apparatus having a rotating chuck and a linker for linking the sausages, in conformity with the present invention is characterized by apparatus for accommodating a cored casing article having a core carrying a supply of shirred casing, said apparatus having a discharge outlet for food product axially aligned with but spaced from the rotating chuck by a distance capable of accommodating a cored casing article, a carrier between the rotating chuck and discharge outlet, means on the carrier for accommodating a cored casing article and defining a casing article axis positioned with respect to the carrier, means for positioning the carrier with the casing article axis position along the axis of the chuck and discharge outlet, engagement means for reducing said distance between the discharge outlet and the rotating chuck to define a stuff position adapted to engage a cored casing article, drive means on the rotating chuck adapted to drivingly engage a cored casing article at its fore end for rotation, the drive means being adapted to allow passage of casing between the drive means and an engaged cored casing article, and means at said discharge outlet adapted to provide a bearing and emulsion seal between the discharge outlet and an engaged cored casing article.

According to its process aspect the present invention provides for a method for producing linked sausages such as frankfurters, which comprises:

(a) mounting a cored casing article onto a stuffing apparatus having a food product discharge, a rotatable chuck and a linker for linking sausages, said article comprising a tubular core carrying a supply of shirred casing;

(b) sealably engaging the aft end of said cored casing article at said food product discharge, and rotatably and sealably engaging the fore end of said article at said rotatable chuck;

(c) rotating said chuck and said cored casing article while passing a food product through the tubular core and into the casing at the fore end;

(d) passing stuffed casing through the rotating chuck and into the linker, thereby producing linked sausages;

(e) sensing imminent casing depletion and ceasing the passage of food emulsion; and

(f) passing the fore end of the tubular core across the rotating chuck to break the string of food product within the casing, thereby to prevent the trailing of food product onto the stuffing apparatus as the trailing end of empty casing is pulled off of the core and through the chuck by the linker.

The improved casing article of the present invention includes a substantially rigid tubular core member disposed within the bore of the casing stick. It is sufficient for purposes of the present invention that the inner periphery of the casing stick be in contact about the outer periphery of the tubular core, preferably over the full length of the casing stick. Moreover, this contact should be sufficient to provide a resistance to relative motion between the core and the casing stick. The core also should have as thin a wall as possible, yet be able to withstand the stresses generated by the casing being in contact about the core. In other words, the tubular core must not be so thin walled or weak as to buckle under the casing generated stresses.

Various advantages are exhibited by cored casing articles. For example a cored casing article has a greater coherency, that is a greater ability to resist breaking than a conventional shirred casing stick which does not have a tubular core member. Resistance to breaking renders the casing article better able to resist the rigors of manual handling and of automatic handling by the suffing apparatus.

Another advantage is that due to the physical support offered by the core, a cored article can contain a greater length of casing than an uncored article. This is a very desirable feature in automatic stuffing operations since greater casing lengths translate to faster production and less machine downtime while a new casing article is being loaded into stuffing position.

Also, with longer casings there are fewer casing ends to deal with. This reduces labor involved in both tying stuffed casing lengths together for subsequent processing, and in removing food product from any malformed end links.

In any event, for purposes of the present invention, the shirred stick on the core is characterized as being in contact about the outer periphery of the core over substantially the full length of the stick. This contact provides a resistance to relative motion between the core and shirred stick which is sufficient to maintain the strand fixed to the core as the core rotates and as casing is deshirred from the strand.

The casing article core of the present invention may be characterized in one aspect thereof by an elongated substantially rigid tubular core for supporting a tubular shirred casing stick, wherein the core includes engaging means on its fore end for driving engagement by a rotational force. In one embodiment, the engaging means is a flange which is oriented in a plane generally perpendicular to the longitudinal axis of the core. The flange has a size sufficient to permit the deshirring over the flange of the casing carried by the core, and a shape which permits coupling of the flange to a rotating drive so that casing passes between the flange and the drive. The flange can be a circular member having peripheral portions which are bent so as to provide the flange with flat surfaces for coupling to the rotating drive.

The cored casing article of the present invention includes a shirred casing stick on the core wherein the core and casing are in sufficient contact to provide a resistance to relative motion therebetween so that rotation of the core will also rotate the casing. A portion of the casing is deshirred over the engaging means on the fore end of the core and twisted to close the end of the casing.

The casing article of the present invention can also be used with stuffing apparatus having a more conventional stuffing horn which extends through the core of the casing article. In such cases, the apparatus would be modified to accommodate driving the core at its fore end.

Other objects and advantages will become apparent upon consideration of the following detailed description in conjunction with the drawings, in which:

Fig. 1 is a perspective view showing stuffing machine modification apparatus exemplifying the present invention;

Fig. 2 is a view taken along the line 2-2 of Fig. 1 showing the casing article carrier;

Figs. 3a and 3b are views taken along line 3-3 of Fig. 1 which illustrate the carrier, adjusted to accommodate cored casing articles of different sizes;

Fig. 4 is a view taken along the line 4-4 of Fig. 1 showing a casing article in the stuff position but prior to be chucked up;

Fig. 5 is a similar view showing the casing article during stuffing;

Figs. 6, 7 and 8 are respectively side, front and top views of the improved core member utilized in the present invention;

Fig. 9 is a side elevation view partly broken away and in section, showing the improved cored casing article of the present invention;

Fig. 10 is an enlarged view taken along the line 10-10 of Fig. 5 showing the roller chuck and core flange;

Fig. 11 is a view on an enlarged scale of a portion of Fig. 5;

Fig. 12 is a partial view showing the core deflector operation;

Fig. 13 is a view taken along the line 13-13 of Fig. 1 showing a spent core indexed into the stripping position; and

Fig. 14 is a similar view showing emulsion being stripped from the spent core.

While the invention will be described in connection with a preferred embodiment, there is no intent to limit it to that embodiment.

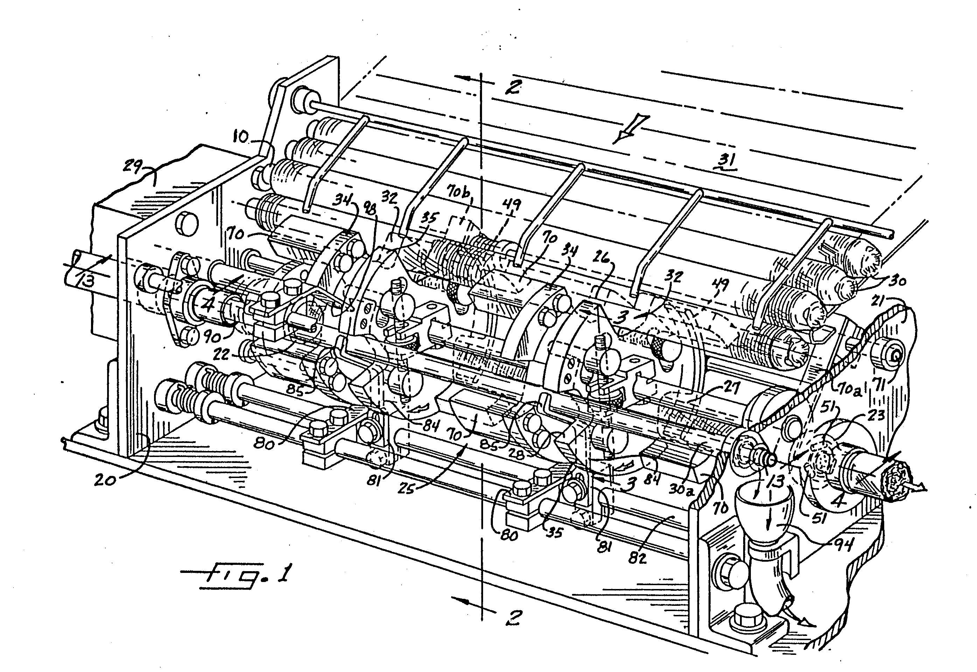

Turning now to the drawings, Fig. 1 shows an adapter for a high speed link stuffing machine of the general type illustrated in the aforementioned U.S. Patent 3,115,668. As illustrated in Fig. 1, the majority of the elements of the adapter apparatus are disposed between a pair of end plates 20, 21, respectively associated with an emulsion discharge 22, and a rotating chuck 23 which cooperates with a conventional linking mechanism (not shown). A carrier 25 is provided for handling the casing article and indexing it between three operating positions, namely, a load position 26, a stuff position 27, and a strip position 28. The carrier 25 cooperates with various guides to be described below and other casing stick handling elements to assure proper indexing and positioning of the casing stick for the various operations.

A supply of cored casing stick articles 30, schematically represented by hopper 31, is positioned for automatic feeding of the articles 30 to the carrier 25. The hopper 31 or other supply source is arranged to supply cored casing articles, one at a time, to the carrier, particularly to a pair of holding means comprised of carrier notches 32 disposed in the load position 26.

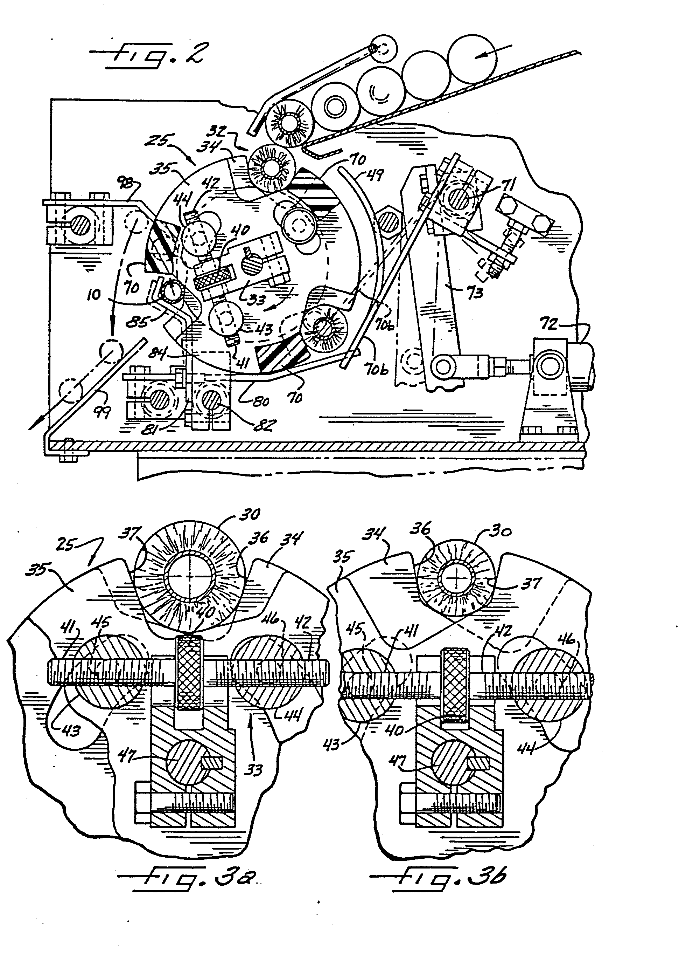

Referring to Fig. 2, there is illustrated the shape of an exemplary carrier notch 32 along with means 33 for adjusting the size of the notch to accommodate a range of casing stick diameters. The notch 32 is formed by two identically shaped opposite-hand discs 34, 35 placed in face-to-face relation to form opposed sides of the notches 32 (see Figs. 3a and 3b). It is seen that each notch includes an upper sharply inclined portion 36 and a lower lesser inclined portion 37, respectively adapted to accommodate a casing article in its two forms, namely, a core 10 carrying a casing supply 13, and the spent core having had its casing supply depleted.

Fig. 3a shows a comparatively large cored casing article 30 carried within the properly adjusted notches and engaging both the walls 36 and floor 37 of the notch. Fig. 3b shows a comparatively smaller casing article 30 similarly engaged by proper adjustment of the carrier. Note that the location of the axis of the casing article remains unchanged, regardless of the diameter of the casing article. Figs. 1 and 2, by way of contrast show the spent core 10 in the strip position 28, engaging only the notch floor 37. As will become more apparent, the position of the article or core within the machine must be maintained with

0123932

reasonable accuracy in order to assure proper interaction between the machine components and the positioned casing article or core. The illustrated notch configuration is a significant factor in accurately positioning the casing article or core for the respective operations.

As noted above, adjustment means are provided for altering the notch size to accommodate a range of casing article diameters. More particularly, referring to Figs. 2, 3a and 3b, there is shown an adjustment mechanism 33 including a knurled knob 40 having oppositely threaded shanks 41, 42 engaged in threaded nuts 43, 44. The nuts in turn are secured by means of rotatably-fixed shafts 45, 46 to respective ones of the opposed discs 34, 35. It is seen that shaft 45 secures the nut 43 to disc 35, whereas shaft 46 secures nut 44 to disc 34. Thus, rotation of the knurled knob will move the shafts either further apart or closer together, carrying the attached discs in the same direction, to either increase or decrease the size of the notch. The adjustment mechanism 33 is itself keyed to the shaft 47 on which the carrier indexes, and thus carries the respective pairs of discs about the indexing axis. In practice the carrier is adjusted by inserting a cored casing article of the size to be utilized that day, into the notches which are located in the load position. The adjustment mechanisms 33 are then operated until the notches engage the exterior of the casing article to bring the article axis into alignment with the machine stuffing axis, with sufficient freedom to allow rotation. The lower portion 37 of the notch is configured to accommodate the spent core after the casing is stuffed out, and does not require further adjustment to align the axis of the spent core with the axis of the emulsion stripping mechanism. It is to be noted that the machine stuffing axis and the machine stripping axis are located at different radial distances from the axis of the carrier mechanism.

Returning to Fig. 1, it is seen that after a cored casing article is in the load position 26, an indexing mechanism 29, which can be of conventional construction, indexes the carrier 120 degrees to locate a new set of notches in the load position, while bringing the notches with loaded casing article 30 to the stuff position 27. Cooperating with the notches and the carrier 25 are a set of arcuate guides 49 which retain the cored casing article within the notches 32 as the carrier is indexed to the stuff position.

Those familiar with the conventional link stuffing machine of the type considered herein will recall that prior to initiating the stuffing of the casing stick, it was necessary to insert a stuffing horn almost 60 cm in length through the bore of an uncored shirred casing stick. During stuffing, the rotating chuck which cooperates with the linker caused the uncored casing stick to rotate on the stuffing horn. Those operations at times presented problems if the casing sticks were not of very high quality. If a casing stick lacked sufficient coherency or was bent or broken, it was often difficult to insert the stuffing horn through the bore without further damaging the casing stick, such as by tearing inner pleats or the like. Even if it were possible to insert the suffing horn through the bore of a slightly defective casing stick, at times the casing stick would bind on the horn, preventing the necessary casing stick rotation and ultimately breaking the casing.

Those and other problems are avoided by the present invention in accommodating the stuffing machine to the use of cored high density casing. More particularly, the core 10 of the cored high density casing article 30, itself serves as the stuffing horn for the machine and can be disposed of after the casing supply is depleted. Since the core provides support for the shirred casing supply, coherency problems as well as bent or broken sticks are eliminated. Furthermore, since there is no need to insert a stuffing horn through the casing bore, it is possible to either increase the diameter of the stuffing horn, increase the amount of casing supply in a given stick length, or often to accomplish both. Thus, it becomes practical to achieve the integral multiple increase in casing length discussed above with the resulting advantages.

In accordance with the invention, the rotatable chuck 23 is provided with engagement means, shown herein as a plurality of rollers 51 for engaging a complementary flange 52 on the cored high density casing article to cause rotation of the entire cored high density casing article about its longitudinal axis, thereby to allow the rotating chuck to cooperate with the linker to form a plurality of linked sausages. In addition, the "quick connect" emulsion discharge generally indicated at 22 is provided with bearing and seal means for engaging the core of the cored high density casing article to allow the chuck-driven rotation of the casing article. By quick connect is meant an engagement mechanism which operates automatically without undue complexity or human intervention.

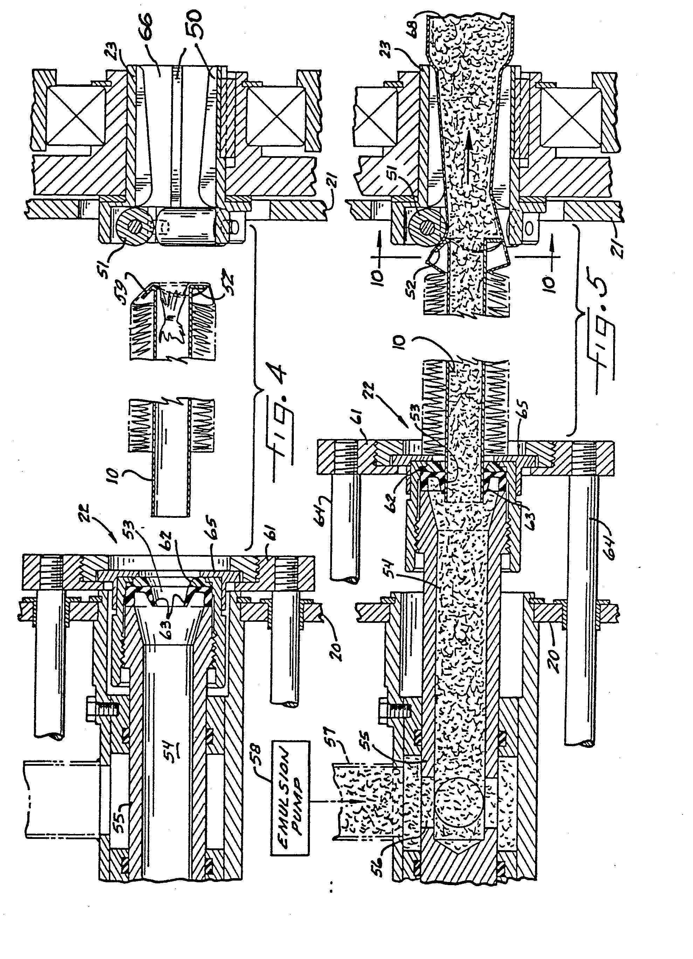

Referring to Figs. 4 and 5, it is seen that the emulsion discharge, generally indicated 22, is translatable from a retracted position shown in Fig. 4 to an operating position shown in Fig. 5. The discharge 22 has an annular opening 53 which is connected to a conduit 54 which is an element of a sliding valve 55 cooperating with an orifice 56 connected by means of conduit 57 to an emulsion pump 58. Thus, with the apparatus shown in the Fig. 5 operating position, emulsion supplied from the pump 58 through the conduit 57 passes through orifice 56 into conduit 54 to the discharge 22. When the discharge 22 is withdrawn to the retracted Fig. 4 position, the orifice 56 is out of register with conduit 57, terminating supply of emulsion from the pump 58.

When the carrier 25 is indexing a new casing article from the load position 26 to the stuff position 27, the discharge is in the retracted Fig. 4 position. There is thus adequate room between the retracted discharge 22 and the roller chuck 23 to allow the carrier 25 to align the axis of the casing article with the common axis of the discharge 22 and roller chuck 23. The above described adjustment of the carrier notches 32 as well as the control of the indexing mechanism 29, assures the alignment of the machine stuffing axis with the axis of the casing article.

Having indexed a new casing article into the stuff position, a pneumatic cylinder (not shown) advances the emulsion discharge 22 to the Fig. 5 operating position. During the course of that advance, the discharge 22 contacts the aft end 14 of the tubular core 10, carrying the flange 52 at the fore end 16 of the core into contact with the roller chuck 23. In practicing this aspect of the invention, the roller chuck 23 and flange 52 are configured to provide a self-engaging drive for the casing article, and an emulsion seal to prevent unacceptable emulsion back flow.

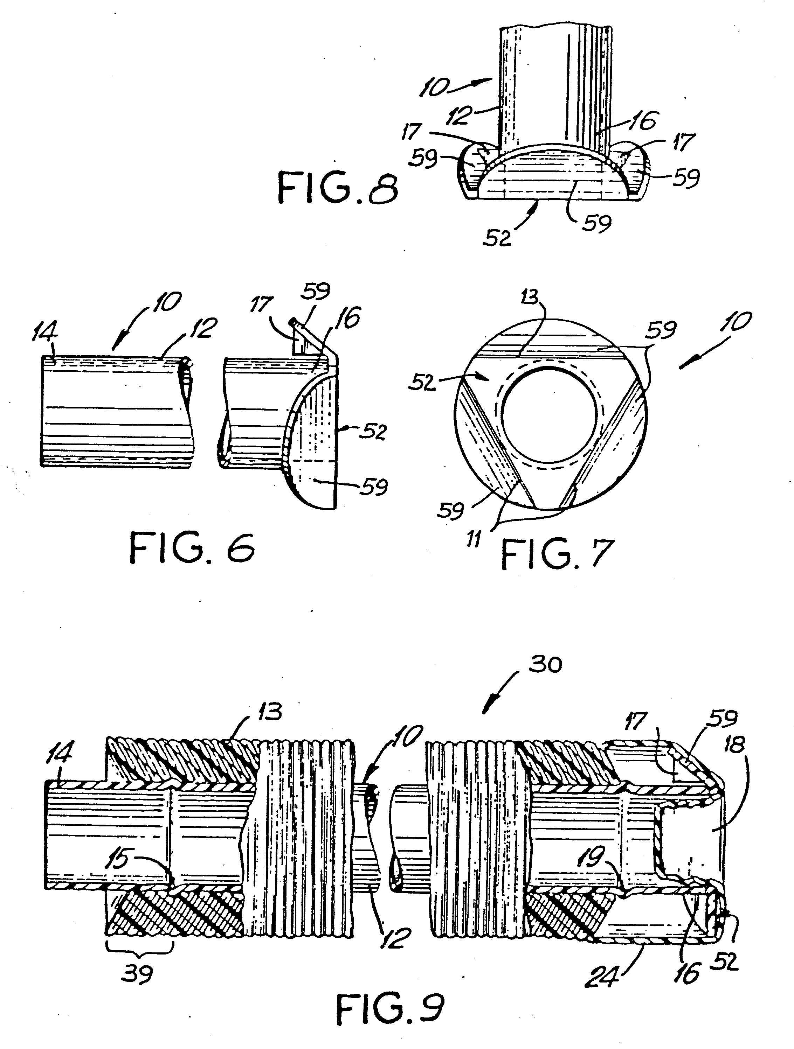

Referring to Figs. 6 to 11, there are shown additional details of the roller chuck and complementary core flange. The core 10 consists of an elongated tubular body 12 having the aft end 14 and the fore end 16. The core is preferably made of a relatively inexpensive material having a high creep strength such as polyvinylchloride which lends itself to the fabrication of disposable, single use items.

On the fore end 16 of core 10 is an engagement means. The engagement means comprises the flange 52 which is oriented in a plane generally perpendicular to the longitudinal axis of the core, and the periphery of the flange includes a plurality of flats 59 which are bent rearward over tubular body 12 in a direction towards aft end 14.

As best seen in Fig. 7, the projection of the flange is a circle. Preferably, the diameter of the flange is substantially equal to the inflated inside diameter of the casing to be carried by the core. This allows the flange to function as an emulsion seal, wherein the periphery of the flange would bear tightly against the inner periphery of the casing passing over the flange.

The flats 59 at the periphery of the flange are defined by chords of equal length as indicated at 11, each flat 59 being bent rearward along these chords.Flats 59 preferably are equally spaced about the periphery of the disc and are three in number as shown in Fig. 7.

While the flange as shown in Figs. 6 to 8 has three flats as defined by chord lengths 11, it should be appreciated that for purposes of the present invention the flange may be formed with any convenient number of such flats.

These flats 59 provide bearing surfaces which are engaged by the rotating chuck of the stuffing machine for rotating the core. In this context, then, other possible shapes or configurations of the engagement means or flange 52 which would compliment the shape of a drive chuck would be readily apparent to one skilled in the art.

It is preferred that the flats 59 be somewhat resilient in order to flex about the chord 11. This ability to flex provides a "soft" engagement of the flange against the drive chuck as the flange and chuck are moved into engagement. Each flat carries a stop 17 on its undersurface which limits the extent of the flexing by butting against the surface of the tubular body 12.

Referring to Fig. 9, there is shown a casing article generally indicated at 30, utilizing the core 10 of Figs. 6 to 8. In this respect, the core is shown as carrying a supply of casing in the form of a shirred stick 13.

Techniques for forming shirred stick 13 are well known in the art and will not be described in detail. It is sufficient for purposes of the present invention merely to say that it involves a shirring process wherein a relatively long length of casing is shirred about a mandrel by any one of several conventional techniques to produce a relatively short shirred stick.

Still further length reduction is accomplished by subjecting the shirred stick to an axial force so as to compact the pleats formed by shirring. The end result is that it is not uncommon in the art to have a shirred stick which is only about 1 % of the length of the unshirred casing, that is, a shirred stick 13 measuring 30 cm in length may contain 21 to 30 or more meters of casing.

Typically, one size of casing used in the manufacture of frankfurters or the like has an inflated diameter of between about 18.5 mm to about 21.1 mm and a wall thickness of about 0.025 mm. Lengths of up to 49 m of such casing would be shirred and compacted to form a stick having a length measuring about 508 mm and a bore diameter of between about 10.6 mm and 12.7 mm.

A shirred stick is resilient and is known to expand both longitudinally and radially inward when removed from the shirring machine. This is especially true for shirred sticks which undergo a subsequent compaction step. For this reason a shirred stick which is made and then transferred to a core should have a slightly larger inside diameter than the outside diameter of tubular body 12 in order to accommodate this radial inward expansion. After the transfer to the core, the shirred stick will expand radially inward so that the inner peripheral surface of the stick engages and contacts about the outer peripheral surface of the core.

The contact and engagement of the casing about the core should be sufficient to resist relative motion between the shirred stick and core. This will permit the stick to spin with the core. That is, any rotation of the core about its longitudinal axis should result in a like rotation of the shirred stick so that the entire casing article 30 can rotate as a unit.

In the article as shown in Fig. 9, the shirred stick is arranged so that the last pleats of casing shirred, that is those adjacent fore end 16, are the first to deshirr when the casing is stuffed. This is the opposite of more conventional stuffing techniques wherein the first casing shirred is also the first casing to be deshirred. The reason for this opposite convention when using cored articles of the type described herein, is that it permits pleats to deshirr without the possibility of tearing any pleat which may be pinched to the core by adjacent pleats in the stick.

In any event, after the shirred stick is disposed on the tubular body 12 of the core, a portion of the casing adjacent the fore end of the tubular core is deshirred as shown at 24 and pulled forward over flange 52. This deshirred portion of casing is formed into an end closure 18 which is used to plug the bore opening of the tubular core. Such end closures for uncored articles and the method and apparatus for effecting such an end closure are well known in the art and may be readily adapted for use with cored articles of the type described herein.

Fig. 9 also shows the tubular body 12 as having a raised rib 15 formed adjacent its aft end 14. This rib preferably is formed after shirred stick 13 is in place on the core. The function of rib 15 is to insure that an anchor portion 39 of the casing which is located aft of the rib 15 remains fixed to the core until all of the casing forward of the rib has deshirred from the stick.

It should be apparent that as casing deshirrs from the stick, the stick gets shorter. As the stick gets shorter, the resistance to relative motion between the core and remaining portion of the stick decreases. It is likely, that at some point, the resistance to relative motion, as provided by the contact between the core and remaining portion of the stick, will be less than the force required to deshirr casing from the stick. When this happens the remaining portion of the stick will break free of the core and begin to move longitudinally along the core towards the fore end 16 responsive to the deshirring force.

The longitudinal movement of this remaining portion of the stick could prematurely initiate termination of the stuffing operation. Consequently, rib 15 provides a barrier to delay any longitudinal movement of the anchor portion 39 of the stick along the core until after all of the casing forward of this rib has been deshirred from the stick.

Preferably a second raised rib 19 is formed adjacent the fore end of the core. This rib 19 is positioned ahead of the shirred stick and functions to prevent a slug of the shirred stick from moving along the core and against flange 52 responsive to the force applied to deshirr from the stick.

In a preferred embodiment, casing article 30 will include features of a so-called "cored high density" article. Cored high density articles per se are described in Belgian Patent No. 893,047, the disclosure of which is incorporated herein by reference so that such articles are not discussed in detail herein. However, by way of illustrating a preferred embodiment of the present invention, an example of a preferred casing article, including cored high density features and its method of manufacture, is described hereinbelow.

Briefly, one feature of a cored high density article is that it contains a longer than conventional length of casing which after shirring, is more highly compacted than conventional, uncored casing articles. The high degree of compaction considerably increases the forces exerted on the core due to the inherent resiliency of the highly compacted casing.

Production of a casing article 30 having cored high density features may begin with a conventional shirring step wherein a conventional cellulosic casing, as may be used in the manufacture of frankfurters, is shirred on the mandrel of a shirring machine in a conventional manner by any one of several shirring techniques. A preferred shirring method is disclosed in U.S. Patent No. 3,779,284. Typical cellulosic casings of this type may have a stuffed diameter of about 20.6 mm, a wall thickness of about 0.025 mm and a moisture content of between about 12-16 %
and preferably, at least about 13 % by weight.

A conventional shirred stick of such casing might contain
about 49 m of casing. For purposes of the present invention it is preferred that the shirred stick contains about
76-87 m of casing.

After shirring, the stick undergoes a compaction step
which further reduces its length. Compaction methods are
known, and, in general, involve placing the shirred stick
on a mandrel having a desired outside diameter, and then
moving a compaction arm against one end of the stick to
compress it up against a restraint. This compacts the
stick while maintaining a desired bore size.

In a preferred compaction method, as disclosed in European
application Serial No. 83 110 536.6, compaction arms are
simultaneously moved against both ends of the shirred
stick to simultaneously move and compress both ends of
the stick towards the middle. This method has found to facilitate compaction and to permit a relatively high degree
of compaction with a relatively low compaction force.

Compaction of 87 m of casing to a length measuring about
48 cm results in a pack ratio of about 180. "Pack Ratio"
is a term of art and is simply the unshirred casing length
in meters divided by the final compacted length in meters.

After compaction, the shirred stick is doffed from the
mandrel and onto the tubular core 10 of the casing article.

It is well known that a shirred stick is resilient and
will begin to expand axially as soon as the compressive forces are relaxed and restraints on the compacted casing are relieved. The bore of the shirred stick will also begin to grow smaller in diameter as the stick expands radially inward into the volume previously occupied by the mandrel. Accordingly, the core must have a high creep strength to resist the forces generated by the resilient shirred stick.

Also, to facilitate transfer of the shirred stick to the core, the outside diameter of the core should be slightly less than the outside diameter of the mandrel on which the strand of shirred casing is compacted. For example, for a typical size of frankfurter casing, it was found that the shirred stick can be doffed from the mandrel having a 12.95 mm outside diameter onto a core having an outside diameter of 12.70 mm.

An example of a tubular core which is able to resist the forces generated by the shirred stick is one made of rigid polyvinyl chloride having an inside or bore diameter of about 11.43 mm and a wall thickness of about 0.64 mm.

After placement on the core, there is some axial growth on the shirred stick so that a final pack ratio may drop from the original compressed pack ratio of 180 to about 159-160. Also, there may be a reduction of bore size of the core. That is the shirred stick may exert a radial inward force on the core sufficient to cause the inside diameter of the core to decrease from about 11.43 mm to about 11.18 mm.

After the shirred stick is placed on the core, rib 15 and, if desired, rib 19 are formed. These ribs can be cold formed by inserting a tool into the bore of core 12 and then operating the tool to raise the ribs. Neither rib 15 nor rib 19 need be very large to function. For example, with the size core and casing as described herein, a rib 15 about 0.76 mm high will be sufficient to function as a deshirring control means.

The flange 52 is then fixed to the core, as by welding. Preferably, the flange is an injection molded piece provided with the flats 59 prior to the time the flange is fixed to the core.

After the flange is fixed to the core, about 25-36 cm of the casing is deshirred and drawn over the flange. This deshirred casing is then formed into a plug 18 and inserted into the bore of the tubular core as shown in Fig. 9.

Thus, a preferred cored high density casing article of the type shown in Fig. 9, with frankfurter size casing, would contain about 87 m of casing and measure about 578 mm from one end of the core to the other. This is in contrast with a more conventional, i.e. uncored, shirred stick for the same size of casing, which measures about 521 mm in length and contains only about 49 m of casing. The bore size of the preferred article of about 11.2 mm would be comparable to the inside diameter of a stuffing horn as may accommodate the more conventional uncored shirred stick.

The drive means for spinning the casing article 30 about its longitudinal axis is provided by rotating chuck 23. Chuck 23 is spaced from and is axially aligned with, the longitudinal axis of sliding conduit 54. Rotation of the chuck is provided by a drive means such as a belt drive or gear train (not shown) which engages about the outer periphery of the chuck. The chuck 23 has a central passage 66 through which the stuffed casing passes and the internal periphery of this passage is provided with a plurality of flutes 50 for engaging the stuffed casing.

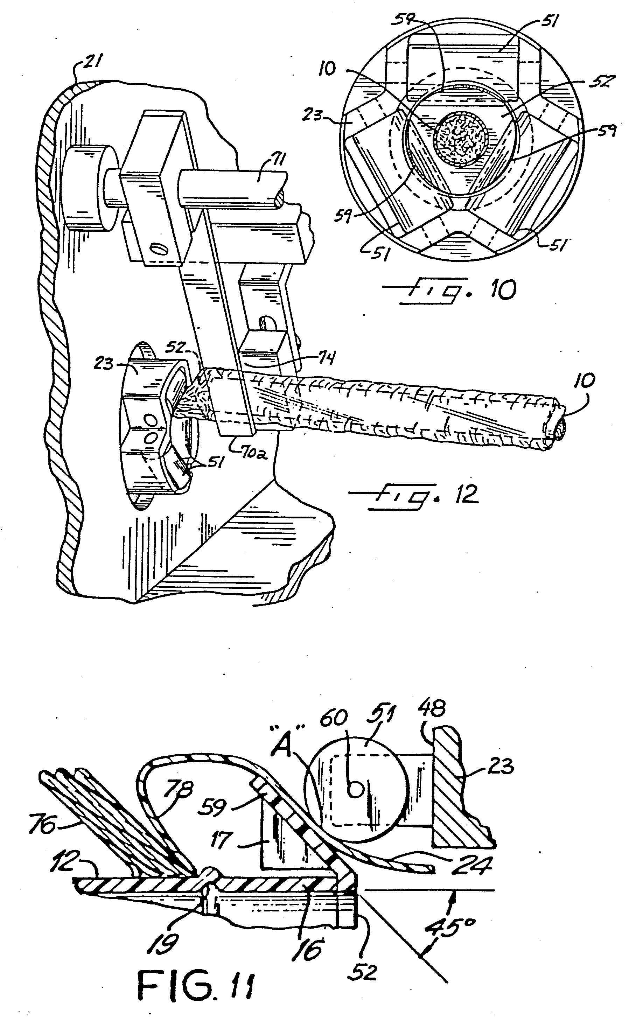

Rotating chuck 23 has a face 48 (Fig. 11) which is generally oriented in a plane perpendicular to the axis of rotation of the chuck. Disposed on this face 48 of the chuck and about opening of passage 66 through this face are rollers 51. The number of rollers 51 corresponds generally to the number of the flats 59 on flange 52. Three rollers 51 are illustrated in the present embodiment by way of example. While a different number can be used, three bearings and three cooperating flattened portions 59 are particularly useful in quickly and reliably engaging the chuck with the end of the casing stick. Quick reliable engagement is necessary because the stick loading cycle should be accomplished as rapidly as possible, typically in a matter of a few seconds.

The rollers 51 are arranged in a symmetrical pattern about the opening of passage 66 through chuck face 48. More specifically, the axis 60 of rotation of each of the rollers will generally inscribe this opening of passage 66 when viewed along the axis of rotation of the chuck. As best seen in Fig. 10, this places the rollers in a position substantially complimentary to the configuration of the flats 59, wherein the axis of rotation of each rollers extends parallel to the plane of a corresponding flat 59.

With this arrangement the rollers 51 can nestably receive flange 52 and automatically align the longitudinal axis of the casing article 30 with the rotational axis with chuck 23. In addition, since these rollers 51 are each oriented along the corresponding flat 59, the rollers can act as drive means to transmit the rotation of chuck 23 to the casing article for rotating the casing article about the longitudinal axis of the article.

0123932

In addition to being driven by chuck 23 about the rotational axis of the chuck, each roller 51 is free to rotate about its own longitudinal axis 60. This allows the casing being deshirred from the casing strand 13, to pass longitudinally between the rollers and the flats 59 of flange 52. The rollers 51, in this aspect, function as antifriction means to allow passage of the casing with relatively low friction in order to prevent binding and possible tearing of the casing at the engagement point of the rollers and flange.

While the roller chuck 23 is stationary when first engaged by the flange 52, once the stick is chucked up, the chuck 23 is rapidly accelerated to a speed on the order of 1,000 rpm. Furthermore, immediately on completion of the chucking-up cycle, the sliding valve 55 which controls emulsion flow is opened, such that emulsion immediately begins flowing through the core for discharge. Thus, there is no time available to carefully assure that all elements are properly engaged before commencing the next machine cycle, and, if the elements don't engage properly, a casing failure is likely.

The triangular configuration of rollers on the roller chuck and the complementary flattened portions on the core flange accomplish the required quick engagement in a reliable manner. In addition, the emulsion flowing through the tube and into the closed end of the casing forces the casing stick toward the roller stuck, providing positive engagement between the flattened portions of the flange and the rollers, thereby to effect an emulsion seal across the roller surface. The non-flattened portions of the flange define an imaginary circle which has a circumference approximately equal to the inflated circumference of the associated casing.

Accordingly, the non-flattened portions of the flange cooperate with the roller bearing portions acting on the flattened portions to effect a continuous emulsion seal, preventing backflow of emulsion behind the flange. Finally, the rollers perform a function in reducing friction to assist the passage of the casing through the nip created between the roller and the flattened portion of the flange.

Returning to Fig. 5, there is illustrated the casing article engaged by the roller chuck as described in detail above. In addition, there is shown the discharge 22 which performs multiple functions including supplying emulsion to the core, supporting the core for rotation, and effecting a rotating emulsion seal. More particularly, there is shown a bearing carrier 61 having affixed therein an annular bearing 62 whose bearing surface supports the aft end of the core 10. A gland seal 63, inboard of the annular bearing 62, creates a rotational emulsion seal preventing emulsion flow between the rotating core and stationary seal. With the gland seal 63 disposed about the aft end 14 as shown, food product pumped into conduit 54 through orifice 56 will exert sufficient pressure to force the gland against the outer periphery of the tubular core and effect a fluid-tight seal therebetween. The gland seal also permits the tubular core 10 to rotate about its longitudinal axis. In this respect the gland seal acts as a bearing to prevent excessive vibration of the aft end during such rotation. If desired, an appropriate bearing means may be provided at the discharge end of the conduit to further accommodate rotation of the casing article 25 about its longitudinal axis.

When the sliding valve is translated to the operating position illustrated in Fig. 5, emulsion flow commences im-

0123932

mediately through the conduit 54 and into the bore of the rotating cored casing article, for passage through the tubular core thereof, to deshirr and stuff the casing to form a plurality of links, a portion of a link being illustrated at 68. It will be appreciated that engagement of the casing article with both the roller chuck and the aft seal arrangement is automatically accomplished upon translation of the bearing carrier from the retracted to the operating position, and such automatic loading is assisted by the adjustable grooves in the carrier which align the axes of the core and stuffing machine, and by the reliable engagement effected by the rotating chuck and complementary flanged core, on the one hand, and the core aft end and emulsion discharge on the other. Furthermore, because the sliding valve which controls emulsion flow is opened immediately at the completion of the chucking up cycle, the casing article must immediately be in condition to pass emulsion and produce links at a very rapid rate. Typically, a complete casing article is expended in several minutes or less, and a new one must be chucked up in a matter of seconds to accommodate the highly efficient operations using this type of stuffing machine.

Reference is now made to Fig. 11 for a further description of the method of deshirring the casing in a direction opposite to the direction in which the casing was shirred, and the operation of rollers 51. In the casing article as shown in Fig. 11, the nested cone geometry indicates that a pleat identified at 76 was shirred before the pleat identified at 78. In a conventional stuffing operation, deshirring would proceed in a direction wherein pleat 76 would deshirr first.

When the casing strand is engaged about a core, as shown in Fig. 11, and especially in a highly compacted casing as described above, pleats 76 may be pinched to the core by the overlying adjacent pleat. Deshirring of an underlying pleat 76 in a conventional manner requires that this pleat be pulled out from under an overlying, or next adjacent, pleat while the overlying pleat is pinching the underlying pleat against the core. Thus, pulling on pleat 76 to effect the deshirring may result in this pleat tearing at the core surface.

In contract, deshirring in a direction which is opposite to the conventional manner, that is, deshirring pleat 78 first, allows each overlying pleat to deshirr before each adjacent underlying pleat. With the overlying pleats removed first, each uncovered underlying pleat is then easily moved from against core body 12.

Fig. 11 also shows the preferred engaging relationship between rollers 51 and the corresponding flat 59 of flange 52. In this respect it has been found that the flange portion is preferably bent rearward at an angle of approximately 45 degrees to the core axis. Likewise, the nip line indicated at "A" between the rollers and flanged portion should be approximately 45 degrees from the core axis. It has been found that this relationship provides an optimum area of contact so that the rollers may drive tubular core 10 about its longitudinal axis while at the same time offering the least resistance to the passage of deshirred casing 24 between the flange and the roller.

It is usually desirable to provide an end-of-casing sensor to signal the machine to withdraw the reciprocatable discharge and thereby terminate emulsion supply by closing of the sliding valve 55. To that end, the bearing carrier 61 is carried by a pair of rods 64 and is spring loaded toward the casing stick. A surface bearing 65 is disposed to contact the end of the casing supply. The surface bearing 65 is of material which minimizes friction between the casing and bearing, to allow rotation of the casing supply against the bearing without harming the casing. However, since the bearing carrier 61 is spring-biased toward the casing, when the casing supply is depleted, the bearing carrier will move toward the right to actuate a switch (not shown) to signal the machine to terminate emulsion flow. Such end-of-casing sensor apparatus as well as casing retention means are described and claimed in concurrently filed European application Serial No. (claiming priority from U.S. application Serial No.481,034 filed March 31, 1983), to which the reader is referred for additional detail.

In typical operation, the cored casing article will be rotated at approximately 1,000 rpm. Considering that the core material is rigid PVC (polyvinyl chloride), but the wall thickness is only about 0.64 mm, it has been found that the approximately 60 cm long tube tends to "whip" as it is being rotated. In practicing one aspect of the invention, means are provided to allow the tube to freely rotate under control of the chuck, but to minimize whipping. In the exemplary embodiment, the carrier includes a plurality of axially extended support arms 70 affixed to the opposed discs 34, 35 near and on either side of the notches 32. The support arms are thus slightly out of contact with the casing article in the stuff position, but are effective to minimize vibration or whipping of the article as it is rotated by the chuck. Similarly, the arcuate guides 49 also assist in minimizing vibration and whipping. Thus, while the article is in a position to freely rotate under the control of the rotating chuck, means are provided to accommodate the non-rigid nature of the disposable stuffing tube to assure trouble-free operation.

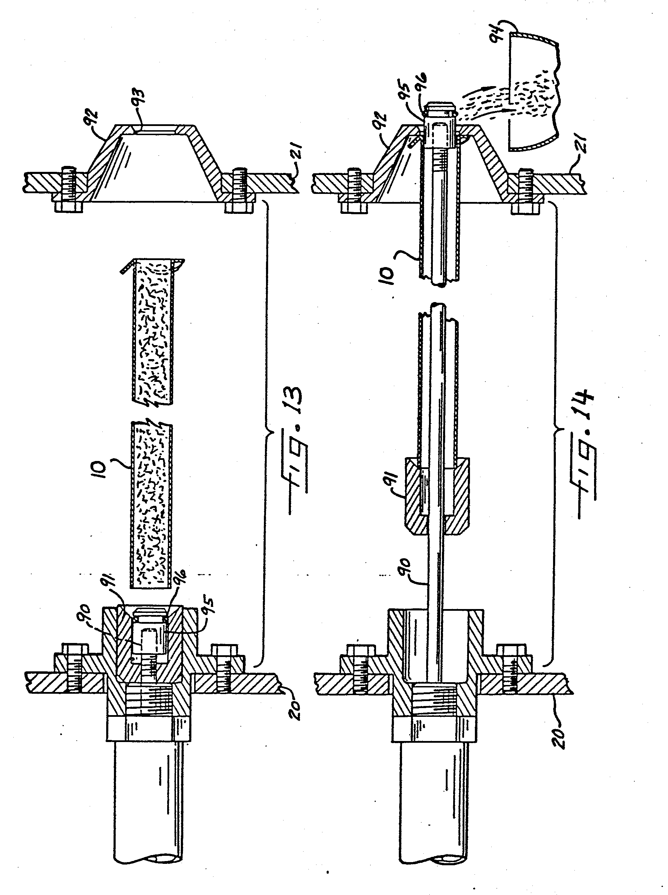

Upon depletion of the casing supply, means are actuated for positively removing the spent casing core from the stuff position, then passing the core to a further position for recovering the meat emulsion within the core. Referring to Figs. 1 and 2, there are shown a pair of deflector fingers 70a, 70b carried on a common shaft 71 supported for rotation in the end plates. Normally, during the stuffing cycle, the deflector fingers are maintained in the solid line position illustrated in Fig. 2 in which they are slightly out of contact with the casing stick in the stuff position. Immediately upon detection of imminent depletion of the casing supply, the emulsion pump is shut off and the sliding valve and the attached withdrawable discharge outlet begin to move to the retracted position. In order to minimize the amount of emulsion which escapes the stuffing operation, means are provided for wiping the still-encased flange end of the core to effect a break in the emulsion which would otherwise tend to string out of the casing and core for possible deposit on the machine. To that end, one of the deflector fingers 70a is positioned immediately adjacent the rotating chuck, such that when it is actuated (see Fig. 12) it wipes the flange of the core across the decelerating but still rotating chuck to break the string of emulsion inside the casing, thereby preventing the trailing of emulsion onto the machine as the linker pulls the casing off of the core and through the chuck. For purposes of bringing the deflectors 70a, 70b into operative position, drive means such as a cylinder 72 (Fig. 2) attached to operating arm 73 serve to rotate the shaft from the non-operated to the operated position. It will be appreciated that the carrier 25 has not yet begun to index at the time the deflector fingers are actuated, and accordingly, the spent core remains within the confining notches 32. In that condition, advantage is taken of the non-rigidity of the core, to accomplish the wiping action promptly by allowing the deflector 70a to introduce a slight bending into the core. Similarly, deflector 70b is actuated by rotation of the shaft 71 for forcing the core upwardly into the notch after the discharge 22 releases the aft end of the tube.

The withdrawal of the discharge outlet from the aft end of the core is assisted by capturing the flange 52 at the fore end of the core by a flange engaging stop 74 (see Fig. 12, showing chuck 23 from the back of the machine for purposes of clarity). Thus, when the deflector finger 70a wipes the tube across the chuck, it also forces the flange 52 behind the flange-engaging stop 74, such that withdrawal of the discharge 22 will not simply carry the core rearwardly, but will positively disengage the discharge from the core, whereupon deflector finger 70b will force the rear end of the tube snugly within its associated notch. At that time, the carrier 25 is indexed 120 degrees to locate a fresh casing stick in the stuff position and to carry the expended core to a strip position.

It will be appreciated that it is conventional in stuffing food products such as emulsions to use a permanent stuffing horn which need be cleaned out only at the end of the day or at the end of a stuffing operation. Using the disposable stuffing horn of the present invention requires attention to be given to recovering the emulsion remaining within the spent core for rework. Realizing that literally hundreds of casing sticks can be consumed in a single day at one plant, it will be appreciated that this stuffing system would tend to lose much of its practical attractiveness without an efficient and trouble-free means of recovering the emulsion from the cores of spent casing articles before discarding the cores.

According to this aspect of the invention, a third station is provided on the carrier and in the machine, known as the strip position 28. With the spent core 10 indexed into the strip position, means are provided for automatically removing the emulsion from the core, and such means are operated while the new core indexed into the stuff position is being expended. Thus, without increasing the machine cycle time in any way, the spent core is stripped of emulsion prior to being discarded.

Referring to Figs. 1 and 2, it is seen that there are provided a plurality of generally horizontal spring loaded fingers 80 which engage the spent core as it is indexed away from the still-actuated deflector fingers 70a, 70b, and which retain the spent core within the associated grooves as indexing continues. Cooperating with the horizontal supports 80, and with the opposed discs 34, 35 are a pair of positioner bars 81 carried on a pivotable shaft 82 which is spring-loaded to force the positioner bars 81 into the reduced diameter section between the discs 34, 35. As indexing of the carrier continues, the spent core ultimately encounters the base portion 84 of the positioner bars 81. The bars 81 deflect to the left as viewed in Fig. 2, positively restraining the spent core within the lower section of the grooves 32. To further assist positive positioning in the strip position, the positioner bars 81 have an upper hooked portion 85 which engages the core about a significant portion of its periphery when the carrier reaches the strip position, as best shown in Fig. 2. When the carrier reaches that position, a new casing article is automatically fed to the portion of the carrier in the load position, and the casing article which had been indexed to the stuff position is automatically chucked up and stuffing is commenced, all as described above. In addition, the spent core in the strip position is automatically restrained with its axis in alignment with the axis of a relatively long stroke cylinder (not shown) having a cylinder rod 90 (Figs. 13 and 14) which projects through the left end plate 20. Actuation of the cylinder causes the rod 90 to move toward the right, which carries a self-centering core positioner 91 from a recess in the end plate 20 into contact with the left end of the spent core. The interior of the self-centering core positioner is concave such that the axis of the rod is thereby aligned with the axis of the core. Continued travel of the rod 90 causes the flanged end of the core to engage a similar self-centering core positioner 92 disposed in the right-hand end plate 21. This core positioner has an aperture 93 which allows passage of the emulsion through the end plate 21 where it can be collected in a container 94.

After the core is properly aligned by the self-centering core positioners, a piston 95 carried on the end of rod 90 and having an O-ring 96 peripherally disposed, projects through the left-hand self-centering core positioner 91 and enters the core. Continued extension of the rod 90 causes the piston 95 to strip the emulsion out of the core 10 as the O-ring 96 wipes the inside surface of the core, forcing all of the emulsion through the aperture 93 in the right-hand core positioner 92 and into the container 94. At appropriate times during the course of the day, the emulsion in the container can be reworked, i.e., reused with the next batch of emulsion.

After the piston has traveled the length of the spent core, the cyliner is reversed and the piston retracted. The spent and empty core is held in the strip position for the remainder of the cycle needed to deplete the casing supply. Thereupon, a new indexing cycle is initiated at which time, in addition to all of the operations described above, the spent and emptied core is rotated free of the positioner bars 81, ultimately contacting stripper fingers 98 which deflect the spent and emptied core from its notches to a ramp 99 for collection in a container (not shown) for disposal.

It will now be appreciated that what has been provided is an improved stuffing method and apparatus as well as a casing article core member for high speed production of linked sausages such as frankfurters. By eliminating the permanent stuffing horn and utilizing cored high density casing, an integral multiple of "smoke stick length" links of sausages can be produced. As a result, tie-off and stripping time and labor are reduced by an integral multiple. In addition, a plurality of smoke sticks can be transported to the smoke house at one time, further saving time and labor. The result can be the production of the given number of kilograms per hour required by a particular house with the use of one fewer stuffing machine. In addition, horn seizures, coherence problems, horn fit problems, as well as problems associated with broken and crooked sticks are completely eliminated. The apparatus disclosed in the present application accomplishes automatic feeding of the casing stick and automatic positioning in both the stuff and strip positions, thus not only allowing the highly automated stuffing desirable for such high production machines, but also at the same time recovering the emulsion from the spent core prior to disposal thereof. While the most significant advantages flow from using the invention with cored high density casing, to which attention has been directed, some of the benefits can still be achieved using other forms of shirred casing disposed on a core. The core member of the present invention has an engagement means on the fore end. As described hereinabove, the engagement means is flange 52 including its component elements 11, 17 and 59. Those skilled in the art will understand that the engagement means could have an alternate configuration. For example, a functional
equivalent of flange 52 is a flared or belled end at the
fore end 16 which is configured to provide for nesting engagement with rollers 51 of chuck 23.

FP-13937/EP

## CLAIMS

1. A stuffing apparatus for producing linked sausages such as frankfurters, said stuffing apparatus having a rotating chuck (23) and a linker for linking the sausages, characterized by apparatus for accommodating a cored casing article (30) having a core (10) carrying a supply (13) of shirred casing, said apparatus having a discharge outlet (22) for food product axially aligned with but spaced from the rotating chuck by a distance capable of accommodating a cored casing article, a carrier (25) between the rotating chuck (23) and the discharge outlet, means (32) on the carrier for accommodating a cored casing article (30) and defining a casing article axis position with respect to the carrier, means (29) for positioning the carrier with the casing article axis position along the axis of the chuck and discharge outlet, engagement means for reducing said distance between the discharge outlet and the rotating chuck to define a stuff position (27) adapted to engage a cored casing article, drive means (51) on the rotating chuck adapted to drivingly engage a cored casing article at its fore end (16) for rotation, the drive means being adapted to allow passage of casing between the drive means and an engaged cored casing article, and means (62, 63) at said discharge outlet (22) adapted to provide a bearing and emulsion seal between the discharge outlet and an engaged cored casing article.

2. A stuffing apparatus for producing linked sausages such as frankfurters, said stuffing apparatus having a rotatable chuck (23) and a linker for linking the sausages, characterized by
(a) means (31) adapted to supply a cored casing article (30) said article comprising a tubular core (10) carrying a supply (13) of shirred casing,

(b) a discharge outlet (22) for food product, axially aligned with, but spaced from the rotatable chuck by a distance capable of accommodating a cored casing article,

(c) a carrier (25) between the rotatable chuck and discharge outlet,

(d) means on the carrier for accommodating a cored casing article and defining a casing article axis position with respect to the carrier,

(e) means (29) for positioning the carrier with the casing article axis position aligned with the axis of the chuck and discharge outlet,

(f) engagement means, adapted to engage a cored casing article (30), and adapted for reducing said distance between the discharge outlet and the rotatable chuck to define a stuff position (27),

(g) drive means (51) on the rotatable chuck, adapted to drivingly engage a cored casing article at its fore end (16) for rotation, the drive means being adapted to allow passage of casing between the drive means and an engaged cored casing article, and

(h) means (62, 63) at the discharge outlet (22) adapted to provide a bearing and emulsion seal between the discharge outlet and an engaged cored casing article.

3. A stuffing apparatus for producing linked sausages such as frankfurters, said stuffing apparatus having a rotatable chuck (23) for engaging and rotating stuffed casing and a linker for forming individual linked sausages from the rotating stuffed casing, characterized by:

- 37 - 0123932

(a) apparatus for accommodating a cored casing article (30), said article having a tubular core member (10) carrying a supply (13) of shirred casing, and said apparatus having a discharge outlet (22) for food product axially aligned with, but spaced from, the rotatable chuck by a distance capable of accommodating said cored casing article;

(b) a carrier (25) located between the rotatable chuck and discharge outlet,

(c) holding means (32) on said carrier for accommodating said casing article, said holding means defining a casing article axis position with respect to said carrier, and said holding means being adapted to accommodate both said casing article and said core member when the casing carried thereby is exhausted by a stuffing operation;

(d) means (29) for indexing said carrier between
  (i) a load position (26) wherein said casing article is loaded onto said carrier, and
  (ii) a stuff position (27) wherein the core of said casing article is axially aligned with said discharge outlet and said rotatable chuck;

(e) engagement means adapted to reduce the distance between said discharge outlet (22) and rotatable chuck (23) for engaging a cored casing article held on said carrier and communicating one end (14) of the tubular core (10) thereof with said discharge outlet;

(f) drive means (51) adapted to drivingly engage and rotate the tubular core of said cored casing article when said article is in said stuff position; and

(g) seal means (63) at said discharge outlet for establishing an emulsion seal between said dis-

- 38 -                              0123932

charge outlet and the end of said tubular core communicated to said discharge outlet.

4. A stuffing apparatus according to any one of claims 1 to 3, wherein said core (10) defines a disposable stuffing horn.

5. A stuffing apparatus according to any one of claims 1 to 4 further including stripper means (90, 91, 92, 95) adapted to strip food product from the interior of a core (10) after the casing supply (13) is expended.

6. A stuffing apparatus according to claim 5, wherein the stripper means (90, 91, 92, 95) includes a piston (95) and self-centering means (91, 92) for engaging and positioning a core (10) to receive said piston.

7. A stuffing apparatus according to any one of claims 1, 2, 4, 5 and 6, wherein the carrier (25) comprises an indexable carrier having a plurality of positions (26, 27, 28) and at least two article holding means (32) at each position for receiving a cored casing article (30).

8. A stuffing apparatus according to claims 3 or 7, further including adjustment means (33) for varying the size of the article holding means (32) to accommodate a range of cored casing article diameters.

9. A stuffing apparatus according to claims 3, 7 or 8, wherein the article holding means (32) comprise notches having sharply inclined upper portions (36) adapted to accommodate a cored casing article (30), and lesser inclined portions (37) adapted to accommodate

- 39 -

0123932

the core (10) after the supply (13) of casing carried thereby is exhausted.

10. A stuffing apparatus according to claim 3 or 7, wherein said carrier (25) includes a pair of discs (34, 35) arranged in a face-to-face relationship, each of said discs having a notch (32) therein and said notches being associated so that each notch provides a side of said holding means.

11. A stuffing apparatus according to claim 9, wherein said carrier (25) comprises a pair of discs (34, 35) arranged in a face-to-face relationship, each of said discs having one of said notches (32) therein and said discs being arranged with said notches aligned so that each notch forms a side of said holding means.

12. A stuffing apparatus according to claim 10 or 11 including means (33) for adjusting one of such discs (34, 35) with respect to another for changing the size of said holding means (32).

13. A stuffing apparatus according to claim 3 or any one of claims 7 to 12, wherein said carrier (25) has a longitudinally spaced pair of said holding means (32), said spaced pair of holding means being axially aligned to define said article axis position.

14. A stuffing apparatus according to claim 3, including a casing article holding means (32) on said carrier (25) at each of said load and stuff positions (26, 27) so that one casing article (30) can be received by said carrier at said load position (26) while a second casing article is at said stuff position (27).

15. A stuffing apparatus according to claim 3 or any one of claims 7 to 14, including a plurality of said holding means (32) arranged at spaced intervals, each of said holding means defining in sequence, on said carrier (25), a load position (26), said stuff position (27) and a strip position (28), and said carrier being indexable from said load position, where one of said casing articles (30) is loaded onto said holding means (32), to said stuff position where stuffing of the casing (13) on said casing article occurs, and then to said strip position where food emulsion is removed from said core member (10) of said casing article.

16. A stuffing apparatus according to claim 8, 9 or 12, wherein said article holding means includes means (36, 37) for holding the central axis of an engaged cored casing article (30) in a fixed position relative to the notches (32), regardless of any size adjustment which is made in order to accommodate cored casing articles of varying diameters, thereby to maintain the casing article axis position aligned with the axis of the chuck (23) and discharge outlet (22) regardless of cored casing article diameter.

17. A stuffing apparatus according to any one of the preceding claims, wherein the carrier (25) includes support means (70) adapted to limit whipping of a casing article (30) during rotation.

18. A stuffing apparatus according to claim 17, wherein said support means (70) are axially extending.

19. A stuffing apparatus according to any one of the preceding claims, wherein said rotatable chuck (23) includes mating means (51), said mating means being adapted to engage mating portions (59) on the fore end (16) of a core (10) of a casing article (30), thereby to rotate an engaged core while allowing passage of casing (13) between an engaged core and the mating means.

20. A stuffing apparatus according to claim 19, wherein said mating means includes rollers (51) rotatable as a set in a plane perpendicular to the chuck axis.

21. A stuffing apparatus according to claim 20, wherein said mating means includes at least three rollers (51).

22. A stuffing apparatus according to claim 19 or 20, wherein said mating means (51) and an engaged mating portion (59) of a core (10) form a seal to minimize back flow of food product.

23. A stuffing apparatus according to any one of the preceding claims, including means (70a) to pass the fore end (16) of the core (10) across the rotating chuck (23) at the end of stuffing, thereby to break the string of food product within the casing (13).

24. Method for producing linked sausages such as frankfurters, which comprises:
(a) mounting a cored casing article (30) onto a stuffing apparatus having a food product discharge (22), a rotatable chuck (23) and a linker for linking sausages, said article comprising a tubular core (10) carrying a supply (13) of shirred casing;
(b) sealably engaging the aft end (14) of said cored casing article at said food product discharge, and rotatably and sealably engaging the fore end (16) of said article at said rotatable chuck;

- 42 -    0123932

(c) rotating said chuck and said cored casing article while passing a food product through the tubular core and into the casing at the fore end;

(d) passing stuffed casing through the rotating chuck and into the linker, thereby producing linked sausages;

(e) sensing imminent casing depletion and ceasing the passage of food emulsion; and,

(f) passing the fore end (16) of the tubular core (10) across the rotating chuck (23) to break the string of food product within the casing (13), thereby to prevent the trailing of food product onto the stuffing apparatus as the trailing end of empty casing is pulled off of the core and through the chuck by the linker.

25. Method for producing linked sausages such as frankfurters, which comprises:

(a) loading a cored casing article (30) into carrier means (25) of a stuffing apparatus, said apparatus having a food product discharge (22), a rotatable chuck (23) and a linker for linking sausages, and said article comprising a tubular core (10) carrying a supply (13) of shirred casing;

(b) indexing the carrier means to bring the cored casing article from a casing loading position (26) to a casing stuffing position (27);

(c) sealably engaging the aft end (14) of said cored casing article at said food product discharge, and rotatably and sealably engaging the fore end (16) of said article at said rotatable chuck;

(d) rotating said chuck and said cored casing article while passing a food product through the tubular core and into the casing at the fore end;

(e) passing stuffed casing through the rotating chuck and into the linker, thereby producing linked sausages;

(f) sensing imminent casing depletion and ceasing the passage of food emulsion;

(g) ceasing chuck rotation and disengaging the casing depleted tubular core from said chuck and said food product discharge;

(h) indexing the carrier means to bring the casing depleted tubular core into a core stripping position (28); and

(i) engaging said core (10) with stripping means (90, 91, 92, 95) under conditions sufficient to remove all food product from the bore of said tubular core.

26. The method of claim 25 including an additional step after step (f) and before step (g), which comprises passing the fore end (16) of the tubular core (10) across the rotating chuck (23) to break the string of food product within the casing (13), thereby to prevent the trailing of food product onto the stuffing apparatus as the trailing end of empty casing is pulled off of the core and through the chuck by the linker.

27. An elongated, substantially rigid tubular core (10) for rotatably supporting a shirred casing on a stuffing machine, said core having a longitudinal bore, an aft end (14), and a fore end (16) adapted to be rotatably driven, wherein the fore end comprises:

(a) a flange (52) oriented in a plane generally perpendicular to the longitudinal axis of said core;

(b) engaging means (59) on said flange adapted for driving engagement by a rotary drive member (51)

- 44 -                    0123932

of the stuffing machine to rotate said core about its longitudinal axis; and

(c) said engaging means and said flange being arranged to accommodate longitudinal passage of tubular casing carried by said core over said flange and between said engaging means and drive member during the rotation of said core.

28. A core according to claim 27, wherein said flange (52) is generally circular.

29. A core according to claim 28 wherein said flange (52) has a diameter substantially equal to the inflated diameter of the casing carried by said core (10).

30. A core according to claim 27, 28 or 29, wherein said engaging means comprises flats (59) formed from peripheral portions of said flange (52), said flats being bent from the plane of said flange in a direction towards said aft end (14).

31. A core according to claims 28 and 30, wherein said peripheral portions are defined by chords (11) of said circular flange (52) which are substantially equal in length.

32. A core according to claim 30 or 31, including three of said flats (59) equally spaced about the periphery of said flange (52).

33. A core according to claim 30, 31 or 32, wherein said flats (59) can flex with respect to the plane of said flange (52).

34. A core according to any one of claims 30 to 33 wherein said flats (59) are disposed at an angle of about 45° with respect to the longitudinal axis of said tubular core (10).

35. A core according to any one of claims 27 to 34 including a shirred casing strand (13) carried by said core (10) and arranged for deshirring towards said fore end (16) and over said flange (52), said casing strand and core being in sufficient gripping contact to resist relative motion therebetween so that rotation of said core will also rotate said shirred casing strand.

36. A core according to claim 35, wherein said shirred casing strand (13) has pleats forming generally a nested cone configuration in cross section wherein any given pleat intermediate the ends of said strand lies between an overlying pleat (78) and an underlying pleat (76) of said nested cone configuration, said strand being arranged on said core (10) for deshirring over said flange (52) such that each overlying pleat is deshirred prior to the next adjacent underlying pleat.

37. A core according to claim 35 or 36 wherein an unshirred portion (24) of said casing is arranged over said flange (52) and forms a plug (18) of casing material releasably positioned within the fore end (16) of said longitudinal bore.

38. A core according to any one of claims 27 to 37 including a projection (15) on said core (10) adjacent the aft end (14) thereof, said projection being engagable against a casing strand (13) carried by said core to restrain that shirred portion (39) of the strand disposed between said core aft end and said projection

- 46 -

0123932

from moving longitudinally along said core towards said flange (52) responsive to deshirring of casing from said strand.

39. A core according to any one of claims 27 to 38 including a projection (19) on said core (10) adjacent the fore end (16) thereof, said projection being engagable against a casing strand (13) carried by said core to prevent movement of any shirred portion of said strand against said flange responsive to deshirring of casing from said strand.

40. A core according to any one of claims 35 to 39 wherein said shirred strand (13) has a pack ratio of about 160 and contains about 87 m of a cellulosic tubular casing having a moisture content of at least about 13 % by weight, the inside diameter of said core (10) being of a size sufficient to accommodate the passage of food product for stuffing said casing.

Fig. 1

2/6

0123932

_fig.2_

_fig.3a_    _fig.3b_

Fig. 4

Fig. 5

EMULSION PUMP

FIG.8

FIG. 6

FIG. 7

FIG.9

0123932

*Fig.* 10

*Fig.* 12

FIG. 11

Fig.13

Fig.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 048 141 (TOWNSEND ENGINEERING) * Page 4, line 66 - page 5, line 51 * | 1,2 | A 22 C 11/02 |
| A | GB-A-2 077 244 (HANDTMANN) * Page 3, lines 87-113; page 4, line 73 - page 6, line 55 * | 1-3,8, 14,15 | |
| A | EP-A-0 064 266 (UNION CARBIDE) * Page 6, line 9 - page 8, line 11 * | 4,37 | |
| A | CH-A- 470 139 (VISKASE) * Whole document * | 4 | |
| A | EP-A-0 016 500 (NIEDECKER) | | TECHNICAL FIELDS SEARCHED (Int. Cl. ³) A 22 C |
| A | US-A-3 672 001 (GREIDER) | | |

-----

The present search report has been drawn up for all claims

| Place of search THE HAGUE | Date of completion of the search 13-07-1984 | Examiner DE LAMEILLIEURE D. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82